# EUROPÄISCHE PATENTSCHRIFT

(11) **EP 2 358 549 B1**
(45) Veröffentlichungstag und Bekanntmachung des Hinweises auf die Patenterteilung: **13.03.2013**
(21) Anmeldenummer: 09783240.6
(22) Anmeldetag: 21.09.2009
(51) Int. Cl.: B60H 1/00

(54) **KLIMAMODUL EINER KLIMAANLAGE MIT EINER GASSENSOREINRICHTUNG**
CLIMATE MODULE OF AN AIR-CONDITIONING SYSTEM WITH A GAS SENSOR DEVICE
MODULE DE CLIMATISATION D'UNE INSTALLATION DE CLIMATISATION AVEC DISPOSITIF DE DÉTECTION DE GAZ

(30) Priorität: 19.11.2008 DE 102008043870
(43) Veröffentlichungstag der Anmeldung: 24.08.2011
(73) Patentinhaber: Robert Bosch GmbH, 70442 Stuttgart (DE)
(72) Erfinder: KAESS, Udo, 70599 Stuttgart (DE); MENDES, Jacek, 71229 Leonberg (Warmbronn) (DE); WEIBLE, Reinhold, 70437 Stuttgart (DE); SODAN, Lars, 72764 Reutlingen (DE); MAHFOUDH, Samir, 77815 Buehl (DE); TAFFE, Dirk, 70197 Stuttgart (DE)
(86) Internationale Anmeldenummer: PCT/EP2009/062200
(87) Internationale Veröffentlichungsnummer: WO 2010/057700

(56) Entgegenhaltungen:
- WO-A-2006/106004
- DE-A1- 10 154 542
- FR-A- 2 854 349

## Beschreibung

### Stand der Technik

Die Erfindung betrifft ein Klimamodul einer Klimaanlage, insbesondere eines Kraftfahrzeugs, mit einer Gassensoreinrichtung, die eine sich an einem Grundhalter abstützende Reflektorkammer mit einer Gaszutrittsöffnung aufweist.

Gassensoreinrichtungen, die nach dem Refraktorprinzip arbeiten, sind prinzipiell bekannt. Sie weisen eine Reflektorkammer mit einer Gaszutrittsöffnung auf, wobei eine Lichtquelle und ein Lichtsensor in einer geometrisch genau definierten Anordnung innerhalb der Reflektorkammer angeordnet sind. Derartige Reflektorkammern sind empfindlich gegen mechanische Beanspruchung, insbesondere gegen Rütteln beim Betrieb, sowie gegen Schmutzeintrag, insbesondere Staubpartikel. Reflektorkammern der gattungsgemäßen Art werden, beispielsweise im Einsatz in Kraftfahrzeugen, mit ihrer Gaszutrittsöffnung in einen Fahrzeuginnenraum gerichtet und sind im Regelfall über Kabelverbindungen an eine Auswerteeinheit angeschlossen. Dabei ist nachteilig, dass mehrere Baugruppen, beispielsweise die Reflektorkammer und ihre Auswerteeinrichtung separat verbaut und elektrisch miteinander verbunden, beispielsweise verkabelt werden müssen. WO 2006/106004 zeigt ein klimamodul gemäβ Oberbegriff des Anspruchs 1.

Die DE 101 54 542 A1 zeigt ein elastisches Halteglied.

Aufgabe der Erfindung ist es, ein Klimamodul einer Klimaanlage mit einer gattungsgemäßen Gassensoreinrichtung bereitzustellen, die in möglichst kompakter Bauform die Einzelverbauung und -verdrahtung von einzelnen Komponenten vermeidet und hierbei eine betriebssichere Betriebsführung auch über längere Zeit gestattet.

### Offenbarung der Erfindung

Hierzu wird ein Klimamodul einer Klimaanlage, insbesondere eines Kraftfahrzeugs gemäβ Anspruch 1 vorgeschlagen. Die Reflektorkammer stützt sich, wie beschrieben, an dem Grundhalter ab, der beispielsweise eine Aufnahme für eine der Reflektorkammer zugeordnete elektrische Leiterplatte ist. Die Reflektorkammer wird zu ihrer Festlegung mittels eines elastischen Halteglieds gegen diesen Grundhalter gedrängt gehalten. Die Reflektorkammer ist folglich nicht durch eine feste Verbindung, beispielsweise eine Verschweißung, Verklebung oder Verschraubung beziehungsweise Verstiftung festgelegt, sondern über das elastische Halteglied, das die Reflektorkammer gegen den beschriebenen Grundhalter drängt. Auf diese Weise wird eine schüttel- beziehungsweise rüttelfeste Klemmverbindung der Reflektorkammer relativ zum Grundhalter erreicht.

Bevorzugt stützt sich das Halteglied einerseits an der Reflektorkammer und andererseits an einem Gehäuseteil des Klimamoduls ab. Das Halteglied wird demzufolge in einer solchen Art und Weise zwischen Reflektorkammer und das Gehäuseteil eingebracht, dass eine Abstützung an beiden Bauteilen erfolgt, das Halteglied demzufolge vorgespannt zwischen Reflektorkammer und dem Gehäuseteil einliegt. Die Reflektorkammer wird hierdurch mittels des elastischen Halteglieds zwischen dem Gehäuseteil einerseits und dem Grundhalter andererseits festgelegt.

In einer weiteren bevorzugten Ausführungsform ist das Gehäuseteil ein Deckel, also ein ein Gehäuse des Klimamoduls verschließendes, lösbares Gehäuseteil. Bevorzugt handelt es sich bei dem Deckel um einen Gebläsereglerdeckel, der ein im Klimamodul eingebrachtes Gebläse zum Betrieb der Klimaanlage regelt, insbesondere in Abhängigkeit von einer über die Kreissensoreinrichtung gemessenen Gaskonzentration regelt. Diese Konstruktion erlaubt die Anbringung der Gassensoreinrichtung in dem Klimamodul als kompakte Baueinheit, wobei die Reflektorkammer rüttelfest, nämlich über das elastische Halteglied, gehalten ist. Eine Verdrahtung als separates Bauteil erübrigt sich hierdurch. Insbesondere wird hierdurch, da der kompakte Aufbau außerordentlich betriebssicher ist, die Fehleranfälligkeit gegen Störungen von außen deutlich reduziert.

Erfindungsgemäβ ist die Reflektorkammer als Reflektorkuppel ausgebildet, wobei sich das elastische Halteglied außen im Bereich von deren Dachbereich, also im Bereich eines Kuppeldachs, der Reflektorkuppel befindet. Die Reflektorkammer hat demzufolge einen kuppelförmigen Aufbau, insbesondere also einen solchen, der eine Bodenausbildung, beispielsweise durch die bereits erwähnte Leiterplatte mit der Lichtquelle und der Sensorik aufweist, und eine Kuppel, die den eigentlichen Reflektor, also die die Reflektion bewirkenden optischen Elemente, beispielsweise Facettenspiegel oder generell eine Verspiegelung, umfasst. Die Reflektorkuppel wird hierbei von dem elastischen Halteglied außenseitig beaufschlagt, und zwar im Bereich ihres Kuppeldaches, also im Wesentlichen oberseitig im Bereich der kuppelförmigen Ausbildung.

In einer weiteren, bevorzugten Ausführungsform liegt die Gaszutrittsöffnung im Bereich des Kuppeldaches der Reflektorkuppel. Die Gaszutrittsöffnung eröffnet die Reflektorkammer zur Umwelt hin, dergestalt, dass das Gas, dessen Konzentration gemessen werden soll, eintreten kann. Diese Gaszutrittsöffnung ist hierbei im Bereich des Daches der Reflektorkuppel, also im Kuppeldach angeordnet, also insbesondere im Bereich ihres Zenits.

Erfindungsgemäβ ist das elastische Halteglied ein elastischer Haltering. Das Halteglied hat demzufolge einen ringförmigen Aufbau, wodurch eine Öffnung von dem elastischen Material des Halterings umschlossen wird. Der Haltering muss hierbei nicht notwendig eine kreisförmige (Außen-) Kontur aufweisen.

Besonders bevorzugt umgibt der Haltering die Gaszutrittsöffnung. Die Gaszutrittsöffnung liegt demzufolge in Gegenüberlage oder teilweise in der Öffnung, die vom elastischen Material des Halterings umschlossen wird. Der Gaszutritt in die Reflektorkammer erfolgt demzufolge durch den Haltering hindurch über die Gaszutrittsöffnung.

Das Halteglied ist bevorzugt als Schaumstoffring ausgebildet. Schaumstoffe stehen in einer Vielzahl von Konfigurationen und in einer großen Bandbreite von Parametern zur Verfügung, so dass für die jeweiligen Einsatzzwecke ein geeigneter Schaumstoff problemlos aufgefunden werden kann. Insbesondere sollen Schaumstoffe Verwendung finden, die ihrerseits keine Schadgaskonzentration freisetzen. Besonders bevorzugt ist das Halteglied aus gemischtzelligem Polyurethan ausgebildet, das vorteilhafte Feder- und Dämpfereigenschaften aufweist. Durch diese Ausbildung ist ferner ein Toleranzausgleich möglich, wodurch sich eine bessere Einbautoleranz ergibt. Das Halteglied wird vorteilhaft in einer solchen Art und Weise ausgebildet, dass es eine maximale Rückstellkraft von 8 N und eine minimale Rückstellkraft von 5 N bewirkt, wodurch ein sicheres Halten bewirkt und eine unerwünschte Verformung der Reflektorkuppel vorteilhaft vermieden werden kann.

Bevorzugt ist der Schaumstoff in Schaumstoffstanzteil. Die Gewinnung des Schaumstoffrings erfolgt demzufolge im Wege eines Stanzvorgangs aus beispielsweise einer Schaumstoffmatte.

Das Gehäuseteil, insbesondere der Deckel, weisen in einer bevorzugten Ausführungsform eine Gasdurchtrittsöffnung auf. Der Gasdurchtritt erfolgt demzufolge in die Reflektorkammer über die Gasdurchtrittsöffnung des Gehäuseteils, durch den Schaumstoffring und die Gaszutrittsöffnung der Reflektorkammer, wobei sich die drei Öffnungen bevorzugt fluchtend gegenüberliegen.

In einer besonders bevorzugten Ausführungsform ist die Gasdurchtrittsöffnung mittels einer gasdurchlässigen Membran verschlossen. Die Membran verhindert den Eintritt von Staub in die Reflektorkammer, der zu unzutreffenden Messungen der Gaskonzentration führen könnte. Der Gaszutritt in die Reflektorkammer erfolgt hierbei bevorzugt durch Gasaustausch und Gasdiffusion durch die Membran hindurch.

In einer weiteren bevorzugten Ausführungsform ist die Gasdurchtrittsöffnung, die am Gehäuseteil ausgebildet ist, von einem Halteelement zumindest bereichsweise umgeben, das das Halteglied hält. Das Halteelement kann hierbei beispielsweise zumindest abschnittsweise ringförmig ausgebildet sein, wobei das Halteglied, insbesondere in seiner Ausführungsform als Schaumstoffring, mit leichter Vorspannung in das Halteelement derart eingesetzt ist, dass es die oben beschriebene, im Wesentlichen fluchtende Anordnung aufweist. Das Halteelement ist besonders bevorzugt als ringförmiges Element in Art eines an das Gehäuseteil angegliederten, insbesondere einstückig angegliederten Tubus ausgebildet und weist unterseitig, nämlich in der der Reflektorkammer beziehungsweise der Reflektorkuppel zugeordnetem Ende, eine umlaufende oder zumindest bereichsweise umlaufende Haltelippe oder Haltenasen auf, die das Halteglied in dem Halteelement fixieren. Auf diese Weise lässt sich ein einfacher Zusammenbau, insbesondere eine Vorfertigung, durch Einsetzen des Halteglieds in das Halteelement, beispielsweise den Deckel, erreichen, ferner wird so ein Verlieren des Halteglieds bei Öffnen des Gehäuses, also beispielsweise Abnehmen des Deckels, sicher vermieden.

Weitere vorteilhafte Ausführungsformen ergeben sich aus den Unteransprüchen und aus Kombinationen derselben.

Die Erfindung wird nachfolgend anhand eines Ausführungsbeispiels näher erläutert, ohne aber hierauf beschränkt zu sein.

Es zeigen
- Figur 1: ein Klimamodul einer Klimaanlage eines Fahrzeugs mit Gassensoreinrichtung;
- Figur 2: ein Gehäuseteil des Klimamoduls, nämlich einen Deckel, und
- Figur 3: eine Schnittdarstellung durch eine Reflektorkammer der Gassensoreinrichtung.

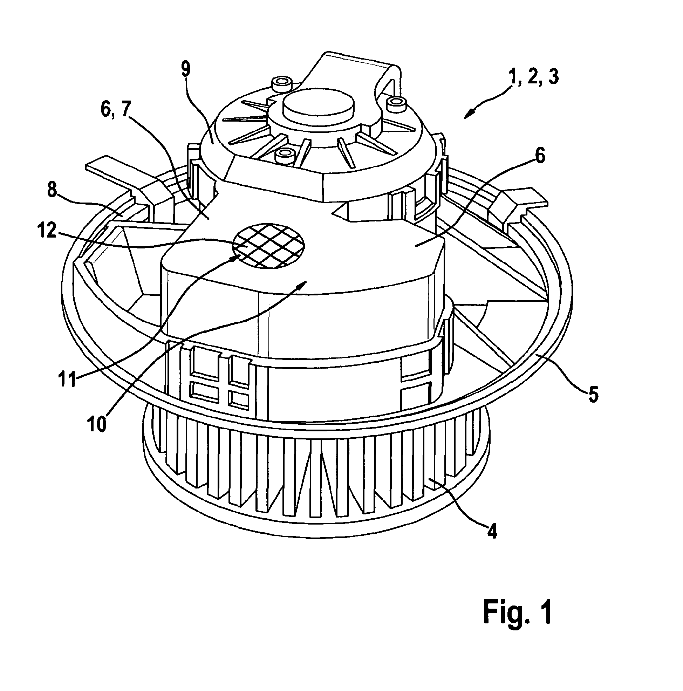

Figur 1 zeigt ein Klimamodul 1 einer nicht dargestellten Klimaanlage eines nicht dargestellten Kraftfahrzeugs. Das Klimamodul 1 umfasst als Modul 2, also als Baueinheit 3, ein Lüfterrad 4 zur Förderung eines hier nicht dargestellten Luftstroms, wobei das Lüfterrad 4 in seiner Axialrichtung über einen Einbauflansch 5 frei hinaustretend angeordnet ist, damit das Lüfterrad 4 in einen nicht dargestellten Luftkanal der Klimaanlage eintreten kann, wobei der Klimakanal von dem Einbauflansch 5 in Einbaulage verschlossen wird. Auf der dem Lüfterrad 4 abgewandten Seite des Einbauflansches 5 ist, unter einem Deckel 6, der ein Gehäuseteil 7 eines Gehäuses 8 des Klimamoduls 1 ist, ein Gebläsemotor 9 zum Antrieb des Lüfterrads 4 angeordnet, wobei unter dem Deckel 6 zur Ansteuerung des Gebläsemotors 9 , insbesondere zur Regelung einer Motorgeschwindigkeit und gefördeter Luftmenge, ein Gebläseregler 10 (aufgrund des montierten Deckels 6 hier nicht sichtbar) angeordnet ist. Dem Gebläseregler 10 ist eine Gassensoreinrichtung 11 zugeordnet, die unter dem Deckel 6 angeordnet ist, und über eine den Deckel 6 zur Umwelt hin eröffnende Gasdurchtrittsöffnung 12 mit ihrer Umgebung in Gasaustauschkontakt steht.

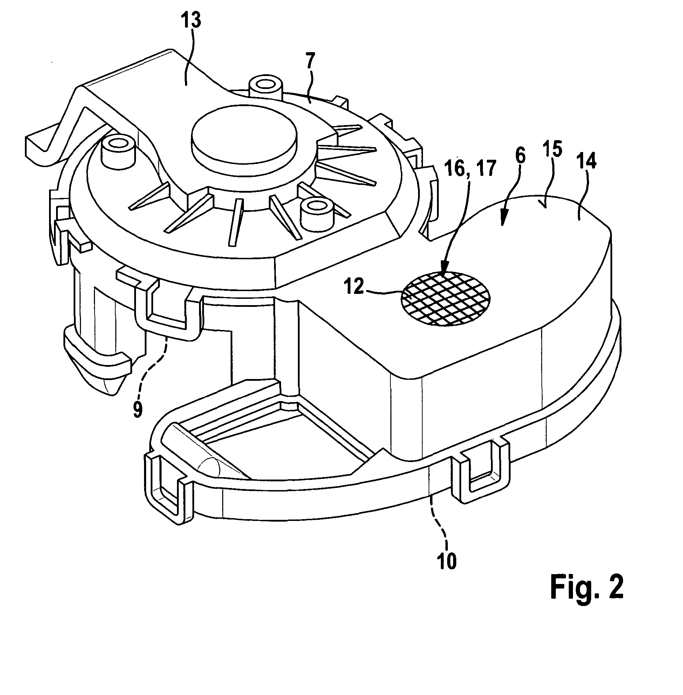

Figur 2 zeigt den Deckel 6, nämlich das Gehäuseteil 7, wobei der Deckel 6 einstückig als Gebläsemotordeckel 13 und als Gebläsereglerdeckel 14 ausgebildet ist. In dem vom Gebläsereglerdeckel 14 umschlossenen Volumen ist der Gebläseregler 10 eingehaust, während im vom Gebläsemotordeckel 13 umschlossenen Volumen der Gebläsemotor 9 untergebracht wird. Auf einer Gebläsereglerdeckeloberseite 15 ist die Gasdurchtrittsöffnung 12 eingebracht, die von einem gasdurchlässigen Wabengitter 16 überdeckt ist, das einen Berührschutz 17 darstellt, der das Hineingreifen oder das Eindringen von Fremdkörpern durch die Gasdurchtrittsöffnung 12 in das von dem Gebläsereglerdeckel 14 umschlossene Volumen also in den Bereich des Gebläsereglers 10, verhindert.

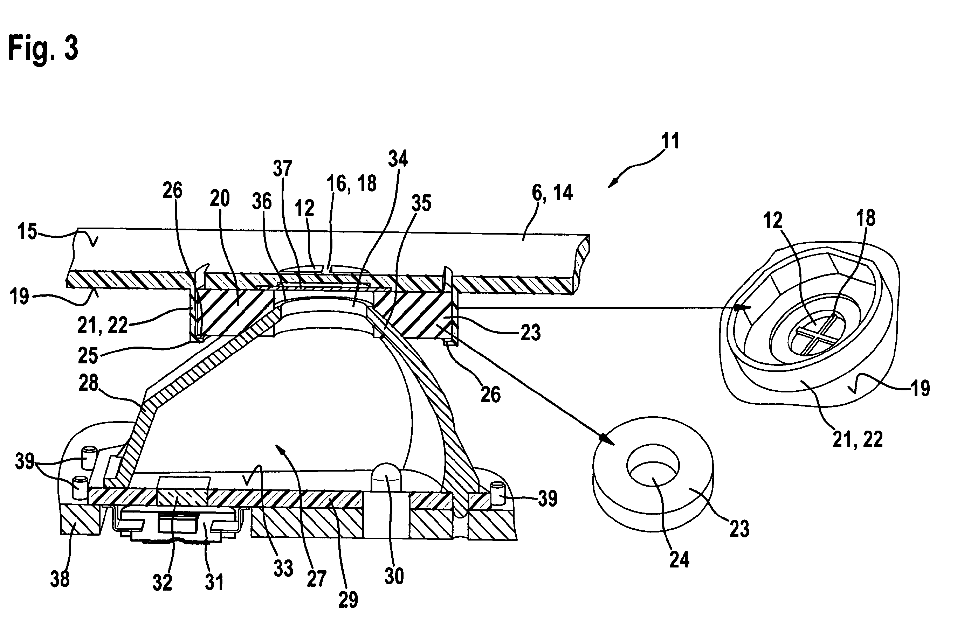

Figur 3 zeigt eine Schnittdarstellung durch den Deckel 6, nämlich den Gebläsereglerdeckel 14, im Bereich der Gasdurchtrittsöffnung 12 im Bereich einer Gitterstrebe 18 des Wabengitters 16. Auf einer der Gebläsereglerdeckeloberseite 15 gegenüberliegenden Gebläsereglerdeckelunterseite 19 ist zur Aufnahme eines elastischen Halteglieds 20 ein einstückig mit dem Deckel 6 in Form eines an der Gebläsereglerdeckelunterseite 19 angespritzten Tubus 21 ausgebildetes Halteelement 22 zur Aufnahme des elastischen Halteglieds 20 angeordnet. Das Halteelement 22 umgibt das Halteglied 20 ringförmig, wodurch das Halteglied 20 mit Vorspannung leicht klemmend radial in das Halteelement 22 außenumfangsseitig gehalten wird. Das Halteglied 20 ist als elastischer Haltering 23 ausgebildet, mit einer Öffnung 24, die mit der Gasdurchtrittsöffnung 12 fluchtend liegt, wenn das Halteglied 20 in das Halteelement 22 eingelegt ist. Das Halteelement 22 hat an seiner dem Gebläsereglerdeckel 14 angewandten Endseite 25 eine Einschnürung 26, die das Halteglied 20, nämlich den Haltering 23, in Einbaulage axial fixiert, so dass sich das Halteglied 20 einerseits an dem Deckel 6, nämlich an der Gebläsereglerdeckelunterseite 19, und zumindest auch an der Einschnürung 26 an der Endseite 25 des Halteelements 22, nämlich des Tubus 21, abstützen kann. Auf diese Weise ist es möglich, das Halteglied 20 in das Halteelement 22 vor Zusammenbau der gezeigten Gassensoreinrichtung 11 in einer Vorfertigung einzulegen. Die Gassensoreinrichtung 11 weist weiter eine Reflektorkammer 27 auf, die von einer Reflektorkuppel 28 und einer diese tragenden Leiterplatte 29 gebildet wird, wobei die Leiterplatte 29 eine Lichtquelle 30 sowie eine Sensoreinheit 31 aufweist, und wobei die Sensoreinheit 31 durch ein Sensorfenster 32 in der Leiterplatte 29 optisch mit der Reflektorkammer 27 verbunden ist. Durch Ausbildung von hier nicht dargestellten Leiterbahnen auf einer Leiterplattenoberseite 33 wird ein dichter Verschluss der Reflektorkammer 27 zur Umgebung hin im Bereich des Anschlusses der Reflektorkuppel 28 an die Leiterplatte 29 erreicht, so dass insbesondere dort kein Durchtritt von Staub oder Feuchtigkeit möglich ist. Bevorzugt ist dieser dichte Anschluss auch gasdicht, so dass der Zutritt von Gas aus der Umgebung der Gassensoreinrichtung 11 nur durch eine Gaszutrittsöffnung 34 erfolgen kann, die im Bereich eines Kuppeldachs 35 der Reflektorkuppel 28, insbesondere in deren Zenit 36, eingebracht ist. Die Gaszutrittsöffnung 34 fluchtet im gezeigten Einbauzustand der Reflektorkammer 27, zur Ausbildung der Gassensoreinrichtung 11, mit der Öffnung 24 des Halteglieds 20 und mit der Gasdurchtrittsöffnung 12, die im Deckel 6 eingebracht ist. Die Gasdurchtrittsöffnung 12 des Deckels 6 ist im Bereich des Wabengitters 16 von einer gasdurchlässigen Membran 37 verschlossen, wobei die Membran 37 relativ zur Gasdurchtrittsöffnung 12 und zur Öffnung 24 des Halterings 23 Übergröße hat, so dass sie durch die Gebläsereglerdeckelunterseite 19 einerseits und den Haltering 23 andererseits klemmend in ihrer Einbaulage gehalten wird. Durch die Membran 37 wird der Durchtritt von feinen Feststoffen wie beispielsweise Staub und auch von unerwünschter Flüssigkeit verhindert. Die Membran 37 weist eine solche Beschaffenheit auf, dass lediglich in der Reflektorkammer 27, insbesondere durch Refraktionsmessung, zu sensierendes Gas durchtreten, insbesondere hindurchdiffundieren kann.

Die gezeigte Anordnung von Reflektorkammer 27, die, wie beschrieben, von der Reflektorkuppel 28 einerseits und der Leiterplatte 29 gebildet wird, wobei die Reflektorkuppel 28 in der Leiterplatte 29 fixiert ist, wird auf einem an dem in Figur 1 gezeigten Einbauflansch angeordneten Grundhalter 38 lose in einer Anordnung von Zentrierstiften 39 und/oder hier nicht dargestellten Zentriernasen und/oder hier nicht dargestellten Haltenasen gehalten, wobei diese die Reflektorkammer 27, insbesondere auch die Leiterplatte 29, nicht mit einer Kraft beaufschlagen, insbesondere nicht klemmend halten. Sie dienen lediglich der Ausrichtung der Leiterplatte 29 und damit der Reflektorkammer 27 beim Zusammenbau des Gehäuses 8 durch Aufsetzen des Deckels 6 auf den Einbauflansch 5 nach Einbringung der Gassensoreinrichtung 11 und/oder des zu vorstehenden Figuren beschriebenen Gebläsemotors 9. Beim Schließen des Deckels 6 wird die Reflektorkammer 27 nämlich von dem elastischen Halteglied 20 im Bereich ihres Kuppeldachs 35 mit einer geringen, aber ausreichenden Kraft beaufschlagt, die beispielsweise zwischen 5 N und 8 N liegt, und hierdurch rüttelsicher gegen den Grundhalter 38 gedrängt und gehalten wird. Die Reflektorkammer 27 erfährt demzufolge in der gezeigten Anordnung ein klemmendes Halten zwischen dem festen Grundhalter 38 und dem nachgiebigen, elastischen Halteglied 20. Auf diese Weise ist eine rüttelsichere Befestigung im Betrieb des Klimamoduls 1 (vergleiche Figur 1) in einem nicht dargestellten Kraftfahrzeug gegeben, ohne dass unerwünschte Einwirkungen, wie beispielsweise Deformationen der Reflektorkuppel 28, auftreten, die die Qualität der Gasmessung in der Gassensoreinrichtung 11 beeinflussen könnten.

Das in Figur 1 gezeigte Klimamodul wird bevorzugt in einem Kraftfahrzeug derart angeordnet, dass es mit der Gasdurchtrittsöffnung 12 in einen Fahrzeuginnenraum des Kraftfahrzeugs ragt, wobei diese Anordnung bevorzugt im Bereich eines Fußraums des Fahrzeugsinnenraums erfolgt, so dass die Gasdurchtrittsöffnung 12 in den Fahrzeuginnenraum ragt und das Lüfterrad in einen dem Innenraum, beispielsweise hinter einer Verkleidung oder Verblendung, angeschlossenen Luftkanal.

## Patentansprüche

1. Klimamodul (1) einer Klimaanlage, insbesondere eines Kraftfahrzeugs, mit einer Gassensoreinrichtung (11), die eine sich an einem Grundhalter (38) abstützende Reflektorkammer (27) mit einer Gaszutrittsöffnung (34) aufweist, **dadurch gekennzeichnet, dass** die Reflektorkammer (27) mittels eines elastischen Halteglieds (20) gegen den Grundhalter (38) gedrängt gehalten ist, wobei die Reflektorkammer (27) als Reflektorkuppel (27) ausgebildet ist, wobei sich das elastische Halteglied (20) außen im Bereich eines Kuppeldachs (35) der Reflektorkuppel (27) befindet und wobei das elastische Halteglied (20) ein elastischer Haltering (23) ist.

2. Klimamodul (1) nach Anspruch 1, **dadurch gekennzeichnet, dass** sich das Halteglied (20) einerseits an der Reflektorkammer (27) und andererseits an einem Gehäuseteil (7) des Klimamoduls (1) abstützt.

3. Klimamodul (1) nach einem der vorhergehenden Ansprüche, **dadurch gekennzeichnet, dass** das Gehäuseteil (7) ein Deckel (6) ist.

4. Klimamodul (1) nach einem der vorhergehenden Ansprüche, **dadurch gekennzeichnet, dass** die Gaszutrittsöffnung (34) im Bereich des Kuppeldachs (35) der Reflektorkuppel (27) liegt.

5. Klimamodul (1) nach einem der vorhergehenden Ansprüche, **dadurch gekennzeichnet, dass** der Haltering (23) die Gaszutrittsöffnung (34) umgibt.

6. Klimamodul (1) nach einem der vorhergehenden Ansprüche, **dadurch gekennzeichnet, dass** das Halteglied (20) als Schaumstoffring ausgebildet ist.

7. Klimamodul (1) nach einem der vorhergehenden Ansprüche, **dadurch gekennzeichnet, dass** der Schaumstoffring ein Schaumstoffstanzteil ist

8. Klimamodul (1) nach einem der vorhergehenden Ansprüche, **dadurch gekennzeichnet, dass** das Gehäuseteil (7), insbesondere der Deckel (6), eine Gasdurchtrittsöffnung (12) aufweist.

9. Klimamodul (1) nach einem der vorhergehenden Ansprüche, **dadurch gekennzeichnet, dass** die Gasdurchtrittsöffnung (12) mittels einer gasdurchlässigen Membran (37) verschlossen ist

10. Klimamodul (1) nach einem der vorhergehenden Ansprüche, **dadurch gekennzeichnet, dass** die Gasdurchtrittsöffnung (12) von einem Halteelement (22) zumindest bereichsweise umgeben ist, das das Halteglied (20) hält.

## Claims

1. Air conditioning module (1) of an air conditioning system, in particular of a motor vehicle, having a gas sensor device (11) which has a reflector chamber (27) which is supported on a base mount (38) and has a gas inlet opening (34), **characterized in that** the reflector chamber (27) is held pressed against the base mount (38) by means of an elastic mounting element (20), wherein the reflector chamber (27) is embodied as a reflector dome (27), wherein the elastic mounting element (20) is located on the outside in the region of a dome roof (35) of the reflector dome (27), and wherein the elastic mounting element (20) is an elastic mounting ring (23).

2. Air conditioning module (1) according to Claim 1, **characterized in that** the mounting element (20) is supported on one side on the reflector chamber (27) and on the other side on a housing part (7) of the air conditioning module (1).

3. Air conditioning module (1) according to one of the preceding claims, **characterized in that** the housing part (7) is a cover (6).

4. Air conditioning module (1) according to one of the preceding claims, **characterized in that** the gas inlet opening (34) is located in the region of the dome roof (35) of the reflector dome (27).

5. Air conditioning module (1) according to one of the preceding claims, **characterized in that** the mounting ring (23) surrounds the gas inlet opening (34).

6. Air conditioning module (1) according to one of the preceding claims, **characterized in that** the mounting element (20) is embodied as a foamed-material ring.

7. Air conditioning module (1) according to one of the preceding claims, **characterized in that** the foamed-material ring is a foamed-material punched part.

8. Air conditioning module (1) according to one of the preceding claims, **characterized in that** the housing part (7), in particular the cover (6), has a gas passage opening (12).

9. Air conditioning module (1) according to one of the preceding claims, **characterized in that** the gas passage opening (12) is closed off by means of a gas-permeable diaphragm (37).

10. Air conditioning module (1) according to one of the preceding claims, **characterized in that** the gas passage opening (12) is surrounded at least partially by a mounting component (22) which holds the mounting element (20).

## Revendications

1. Module de climatisation (1) d'une installation de climatisation, notamment d'un véhicule automobile, comprenant un dispositif de détection de gaz (11) qui présente une chambre de réflecteur (27) supportée sur un support de base (38), avec une ouverture d'alimentation en gaz (34), **caractérisé en ce que** la chambre de réflecteur (27) est maintenue pressée contre le support de base (38) au moyen d'un organe de retenue élastique (20), la chambre de réflecteur (27) étant réalisée sous forme de coupole de réflecteur (27), l'organe de retenue élastique (20) se trouvant à l'extérieur dans la région d'un dessus de coupole (35) de la coupole de réflecteur (27) et l'organe de retenue élastique (20) étant une bague de retenue élastique (23).

2. Module de climatisation (1) selon la revendication 1, **caractérisé en ce que** l'organe de retenue (20) s'appuie d'une part contre la chambre de réflecteur (27) et d'autre part contre une partie de boîtier (7) du module de climatisation (1).

3. Module de climatisation (1) selon l'une quelconque des revendications précédentes, **caractérisé en ce que** la partie de boîtier (7) est un couvercle (6).

4. Module de climatisation (1) selon l'une quelconque des revendications précédentes, **caractérisé en ce que** l'ouverture d'alimentation en gaz (34) est située dans la région du dessus de coupole (35) de la coupole de réflecteur (27).

5. Module de climatisation (1) selon l'une quelconque des revendications précédentes, **caractérisé en ce que** la bague de retenue (23) entoure l'ouverture d'alimentation en gaz (34).

6. Module de climatisation (1) selon l'une quelconque des revendications précédentes, **caractérisé en ce que** l'organe de retenue (20) est réalisé sous forme de bague en mousse.

7. Module de climatisation (1) selon l'une quelconque des revendications précédentes, **caractérisé en ce que** la bague en mousse est une pièce estampée en mousse.

8. Module de climatisation (1) selon l'une quelconque des revendications précédentes, **caractérisé en ce que** la partie de boîtier (7), notamment le couvercle (6), présente une ouverture de passage de gaz (12).

9. Module de climatisation (1) selon l'une quelconque des revendications précédentes, **caractérisé en ce que** l'ouverture de passage de gaz (12) est fermée au moyen d'une membrane perméable aux gaz (37).

10. Module de climatisation (1) selon l'une quelconque des revendications précédentes, **caractérisé en ce que** l'ouverture de passage de gaz (12) est entourée au moins en partie par un élément de retenue (22) qui retient l'organe de retenue (20).
